# EUROPEAN PATENT SPECIFICATION

(11) **EP 1 911 861 B1**
(45) Date of publication and mention of the grant of the patent: **09.03.2011**
(21) Application number: 06121115.7
(22) Date of filing: 22.09.2006
(51) Int. Cl.: C25B 15/08, C25B 9/06, C25B 11/02

(54) **Electrolyzer**
Elektrolyseur
Electrolyseur

(43) Date of publication of application: 16.04.2008
(73) Proprietor: Shyu, Wen-Shing, 407 Taichung City, Taiwan (CN)
(72) Inventor: Shyu, Wen-Shing, 407 Taichung City, Taiwan (CN)
(74) Representative: Viering, Jentschura & Partner

(56) References cited:
- WO-A2-01/42143
- JP-A- 8 168 767
- US-A- 4 125 439
- US-A- 4 457 813
- US-A- 4 761 208
- US-A- 5 534 120

## Description

The invention relates to an electrolytic cell or electrolyzer having a radial flowing passage for suitably separating and collecting anolyte and catholyte from a flowing electrolyte or water, and for preventing the anolyte and the catholyte from being mixed or blended with each other.

Typical electrolytic cells or electrolyzers comprise one or more anodes and one or more cathodes disposed within a cell body or container that is provided for receiving electrolyte therein, for generating anolyte and catholyte by energizing or actuating or operating the anodes and the cathodes, and for utilizing the anolyte and the catholyte to electroplate various kinds of work pieces, for example.

In some circumstances, the anolyte and the catholyte are required to be separated from each other, for such as manufacturing or separating chlorine and caustic from brine. Accordingly, one or more separators or separating devices are required to be disposed or engaged into the electrolytic cells or electrolyzers for separating the anolyte and the catholyte from each other in the typical electrolytic cells.

For example, U.S. Patent No. 4,342,636 to Chang et al. discloses one of the typical electrolytic cells including a porous polyfluoroalkylene sheet disposed therein and acted as a separator for the electrolysis of brine and for separating the anolyte and the catholyte from each other.

However, the typical porous polyfluoroalkylene sheet is good enough for separating the anolyte and the catholyte from each other in a static or motionless electrolyte in the electrolytic cells or electrolyzers, but the typical electrolytic cells or electrolyzers may not be used for separating and collecting the anolyte and the catholyte from the flowing electrolyte or water.

In addition, normally, the inlet ports of the typical electrolytic cells or electrolyzers include a cross section or area identical to the outlet ports of the typical electrolytic cells or electrolyzers for allowing the electrolyte or water to flow in the same flowing speed into and out of the typical electrolytic cells or electrolyzers, such that the outward flowing speed of the electrolyte or water may not be suitably decreased or slowed down.

US 4,125,439 A describes an electrochemical cell having substantially parallel electrodes in the form of discs axially spaced from each other and connected for common rotation about their axis, one of the discs having means defining a central opening.

The invention has arisen to mitigate and/or obviate the afore-described disadvantages of the conventional electrolytic cells or electrolyzers for separating the anolyte and the catholyte from each other.

The primary objective of the invention is to provide an electrolytic cell or electrolyzer having a radial flowing passage for suitably separating and collecting the anolyte and the catholyte from the flowing electrolyte and for preventing the anolyte and the catholyte from being mixed or blended with each other.

According to the present invention, an electrolyzer as claimed in claim 1 is provided. The dependent claims show some examples of such an electrolyzer.

In accordance with one aspect of the invention, there is provided an electrolyzer comprising a housing including a space formed therein for receiving an electrolytic solution to be electrolyzed, and a cathode plate and an anode plate disposed in the space of the housing and disposed horizontally and arranged one above the other, and spaced from each other for forming a gap between the anode plate and the cathode plate, and arranged for guiding the electrolytic solution to flow radially through the gap formed between the anode plate and the cathode plate, and the cathode plate is provided for attracting anolyte of the electrolytic solution toward the cathode plate, and the anode plate is provided for attracting catholyte of the electrolytic solution toward the anode plate, and for allowing the anolyte and the catholyte to be separated from each other.

A separator is disposed in the housing and disposed around the anode plate and the cathode plate, and inc;ides a tip extended toward the gap that is formed between the anode plate and the cathode plate for separating the anolyte and the catholyte from each other. A cover is attached onto the housing for enclosing the space of the housing, and engaged with the separator for positioning the separator between the housing and the cover.

The cover includes a compartment formed therein and includes a plurality of ribs extended into the compartment of the cover and extended radially from the mouth toward an outer peripheral portion of the cover.

The separator includes at least one projection extended therefrom for engaging with the cathode plate. The separator includes at least one stud extended therefrom for engaging with the anode plate. The cathode plate includes a bore formed therein for attaching a conductor tube which includes a bore formed therein for receiving the anolyte.

The housing includes a cylindrical member extended downwardly therefrom and a bore formed therein and communicating with the space of the housing, a plurality of ribs extended into the space of the housing and extended radially and outwardly from the bore of the cylindrical member, and the anode plate is disposed above the ribs of the housing.

A receptacle includes a chamber formed therein and defined by an inner peripheral surface, and includes a first port and a second port formed therein and communicating with the chamber of the receptacle for allowing the electrolytic solution to flow into and out of the chamber of the receptacle, the cylindrical member of the housing is engaged into the chamber of the receptacle.

Further objectives and advantages of the invention will become apparent from a careful reading of the detailed description provided hereinbelow, with appropriate reference to the accompanying drawings.
FIG. 1 is an exploded view of an electrolytic cell or electrolyzer in accordance with the invention having a radial flowing passage;
FIG. 2 is a partial exploded view of the electrolytic cell or electrolyzer as seen from bottom thereof;
FIG. 3 is a partial perspective view of the electrolytic cell or electrolyzer, in which one half of the electrolyzer has been cut off for showing an inner structure of the electrolyzer;
FIG. 4 is a cross sectional view of the electrolyzer taken along lines 4-4 of FIG. 3;
FIG. 5 is a cross sectional view similar to FIG. 4, illustrating the assembling of the separating device;
FIG. 6 is a cross sectional view similar to FIGS. 4 and 5, illustrating the operation of the separating device;
FIG. 7 is an enlarged partial cross sectional view of the electrolyzer as that shown in FIGS. 4-6;
FIGS. 8, 9 are cross sectional views taken along lines 8-8, 9-9 of FIG. 6 respectively;
FIG. 10 is a partial top plan schematic view illustrating the flowing of the electrolyte or water;
FIG. 11 is a diagram illustrating the changing of the electric current of the flowing electrolyte or water;
FIG. 12 is a diagram illustrating the changing of the flowing speed of the flowing electrolyte or water;
FIG. 13 is an exploded view similar to FIG. 1, illustrating the other arrangement of the electrolyzer;
FIG. 14 is a partial perspective view of the electrolytic cell or electrolyzer as shown in FIG. 13, in which one half of the electrolyzer has also been cut off for showing an inner structure of the electrolyzer;
FIG. 15 is a cross sectional view of the electrolyzer taken along lines 15-15 of FIG. 14; and
FIG. 16 is another cross sectional view similar to FIG. 15, illustrating the operation of the electrolytic cell or electrolyzer as shown in FIGS. 13-15.

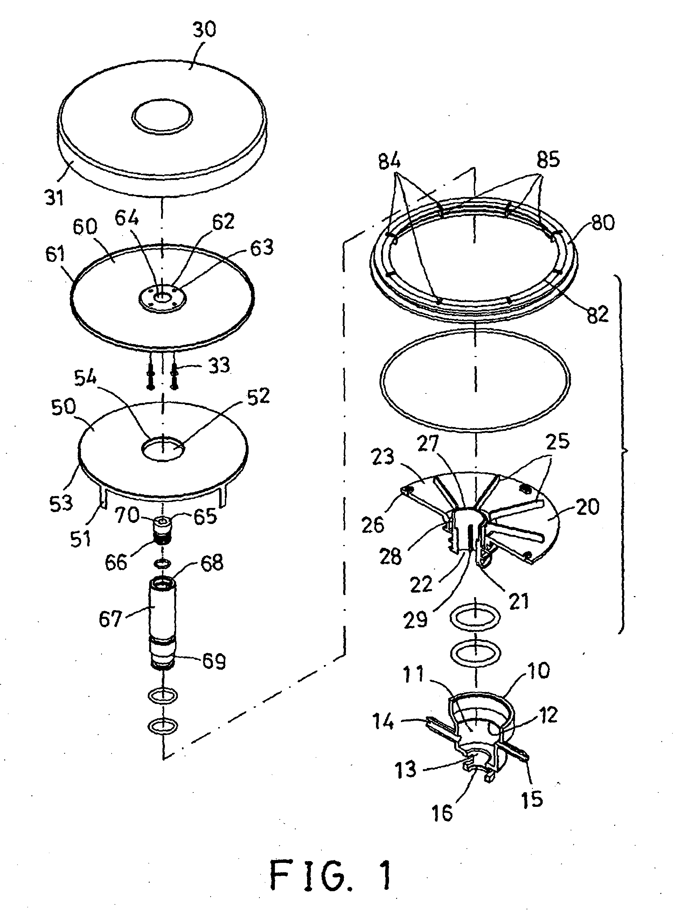

Referring to the drawings, and initially to FIGS. 1-4, an electrolytic cell or electrolyzer 1 in accordance with the invention comprises a body or receptacle 10 including a chamber 11 formed therein and defined by an inner peripheral surface 12, and including a reduced or narrowed conduit 13 formed in the lower portion thereof and communicating with the chamber 11 of the receptacle 10, and including a first or inlet port 14 formed therein and communicating with the chamber 11 of the receptacle 10 for receiving such as water or brine or other electrolytic solutions, and including a second or outlet port 15 formed therein and also communicating with the chamber 11 of the receptacle 10, and including an inner peripheral shoulder 16 formed in the lower portion thereof.

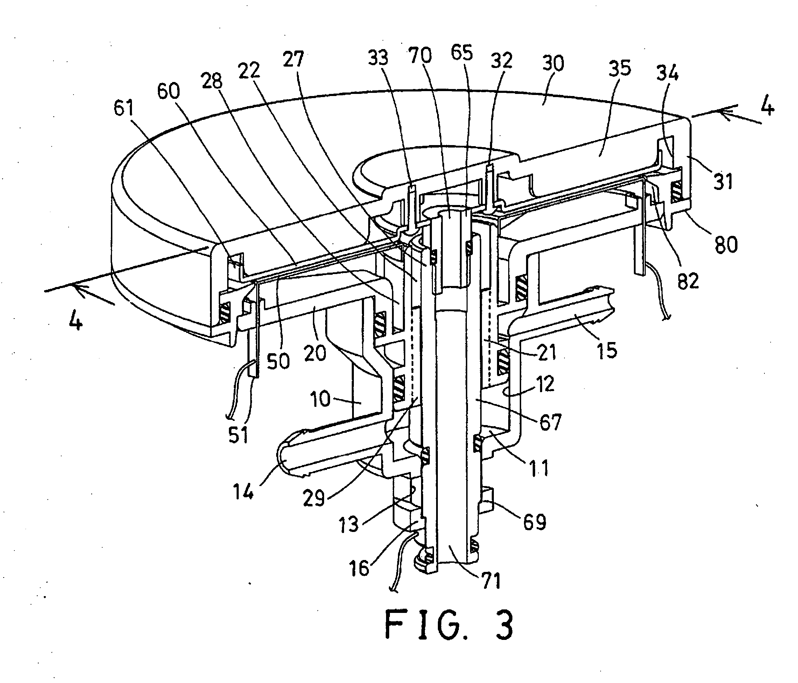

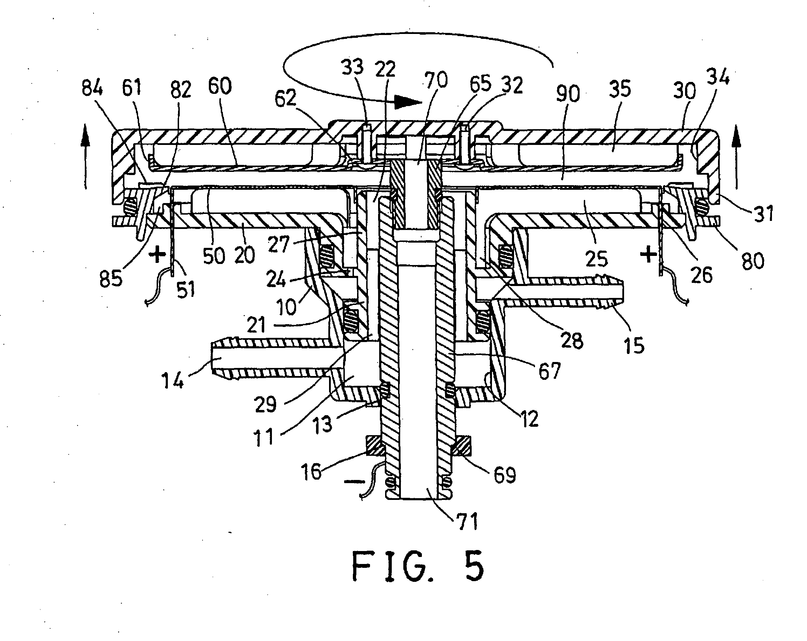

A housing 20, such as a lower housing 20 includes a sleeve or cylindrical member 21 extended downwardly therefrom for engaging into the chamber 11 of the receptacle 10 and having a bore 22 formed therein for communicating with the chamber 11 and the port 14 of the receptacle 10 (FIGS. 3-6), and includes an upper space 23 formed therein and communicating with the bore 22 of the cylindrical member 21, and includes a number of radially extended ribs 25 extended in the space 23 of the housing 20 and extended from the outer peripheral portion of the bore 22 of the cylindrical member 21 to the outer peripheral portion for guiding the catholyte to flow from the space 23 into a peripheral channel 28 of the housing 20.

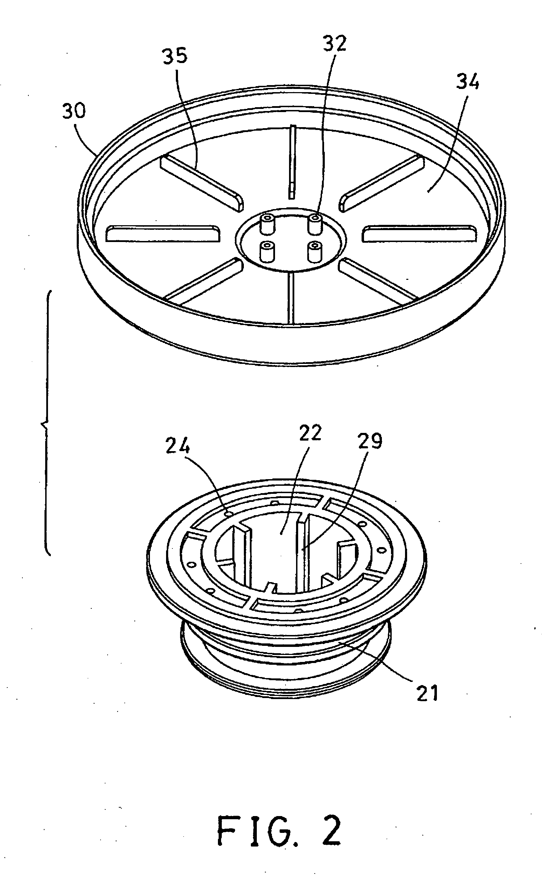

The cylindrical member 21 of the housing 20 may be solidly secured to the receptacle 10 with such as force-fitted engagements, adhesive materials, or by welding processes, and the housing 20 further includes one or more, such as four orifices 26 formed therein and communicating with the space 23 of the housing 20, and includes a peripheral channel 28 formed in the inner peripheral portion thereof and located between an upper portion 27 of the cylindrical member 21 and the housing 20, and includes one or more openings 24 formed therein (FIGS. 2, 4-6) and communicating with the peripheral channel 28 of the housing 20, and includes one or more protrusions 29 extended radially into the bore 22 of the cylindrical member 21 of the housing 20. A cover 30 may be provided and engaged or attached or secured onto the housing 20 with such as an annular gasket or separator 80 for enclosing the space 23 of the housing 20.

The cover 30 includes a peripheral fence 31 extended downwardly from the outer peripheral portion thereof for engaging onto or into the housing 20 and/or the annular gasket or separator 80 with such as a force-fitted engagement, or by adhesive materials or by welding processes. The cover 30 includes one or more screw holes 32 formed therein for threading or engaging with screws or fasteners 33, and includes a compartment 34 formed therein. The cover 30 includes a number of radially extended ribs 35 extended into the compartment 34 of the cover 30 and extended from the inner peripheral portion to the outer peripheral portion of the cover 30 for guiding the anolyte to flow through the space between the cover 30 and the cathode plate 60. The compartment 34 of the cover 30 and the space 23 of the housing 20 may be provided for receiving the electrolytic solution or water to be treated or to be electrolyzed.

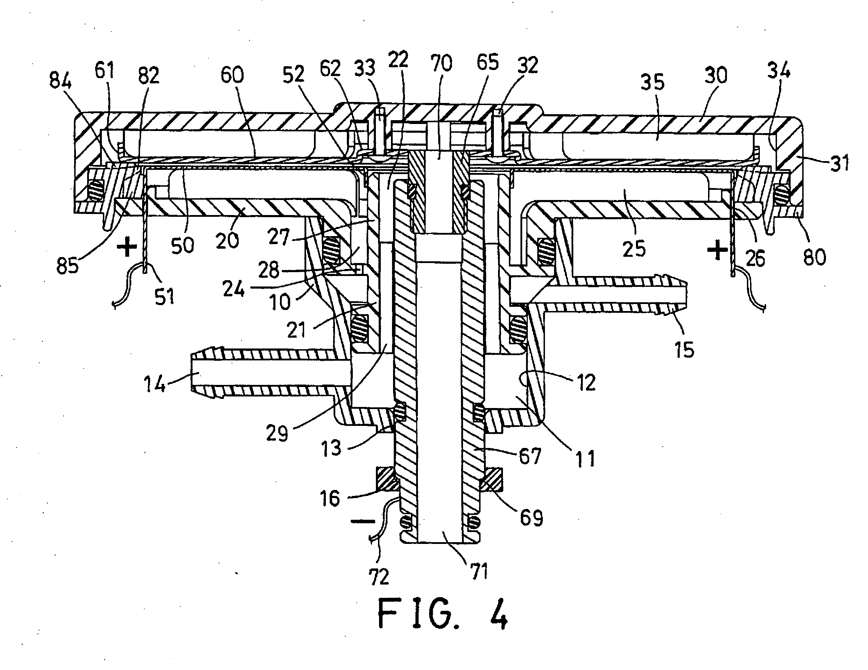

An anode plate 50 is disposed or engaged into the space 23 of the housing 20 and disposed or engaged onto or seated or supported on the upper portion of the ribs 25 of the housing 20 (FIGS. 4-6), and includes one or more (such as four) electrodes 51, such as positive electrodes 51, extended therefrom for engaging through the orifices 26 of the housing 20 respectively and for coupling to such as the positive electric power source, and includes a center hole 52 formed therein for receiving or engaging with the upper portion 27 of the cylindrical member 21 and the housing 20 and for allowing the electrolytic solution or water to be guided and to flow upwardly through the center hole 52 of the anode plate 50 and thus for allowing the electrolytic solution or water to be treated or electrolyzed by the anode plate 50. The anode plate 50 may include an outer peripheral fence 53 and an inner peripheral fence 54 for reinforcing the anode plate 50.

A cathode plate 60 is disposed or engaged into the space 23 of the housing 20 or into the compartment 34 of the cover 30 and disposed or engaged onto or seated on the bottom portion of the ribs 35 of the cover 30, and includes an outer peripheral fence 61 and an inner swelling 62 for reinforcing the cathode plate 60, and includes one or more orifices 63 formed therein for receiving the fasteners 33 and includes a bore 64 formed therein for receiving or engaging with a conductor tube 65 which may be solidly secured to the cathode plate 60 with such as force-fitted engagements, adhesive materials, or by welding processes. The conductor tube 65 includes an outer thread 66 for threading with an inner thread 68 of a conductor pipe 67 which is engaged through the bore 22 of the cylindrical member 21 and extended out of the conduit 13 of the receptacle 10.

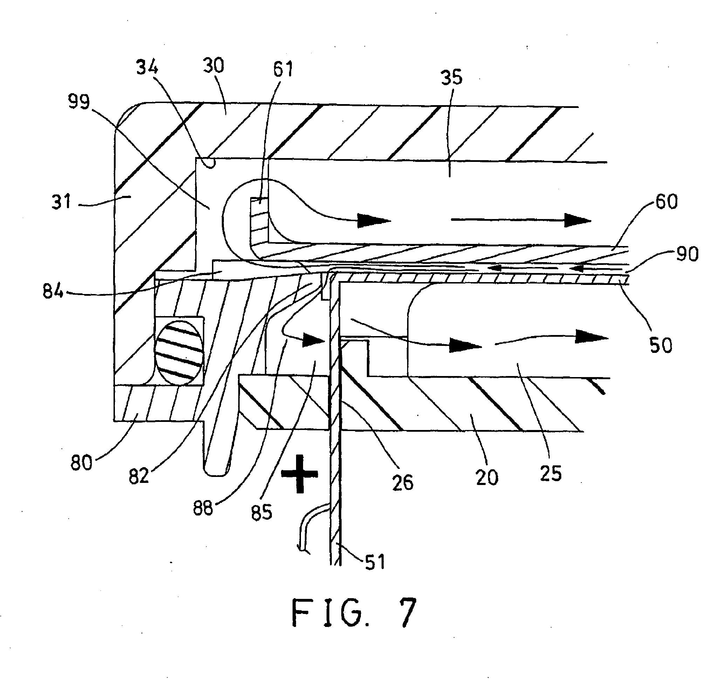

As shown in FIGS. 4-6, the conductor tube 65 and the conductor pipe 67 are electrically coupled to the cathode plate 60, and the conductor pipe 67 is coupled to the negative electric power source with such as an electric wire or cable 72 for actuating the cathode plate 60 to generate an anolyte 99 (FIG. 7). The conductor tube 65 and the conductor pipe 67 each include a bore 70, 71 formed therein and communicating with the compartment 34 of the cover 30 for receiving the anolyte 99 from the compartment 34 of the cover 30 and for allowing the anolyte 99 to flow out through the bore 71 of the conductor pipe 67. The conductor pipe 67 includes an outer peripheral shoulder 69 formed in the lower portion thereof for engaging with the inner peripheral shoulder 16 of the receptacle 10 and for anchoring or positioning or securing the conductor pipe 67 to the receptacle 10.

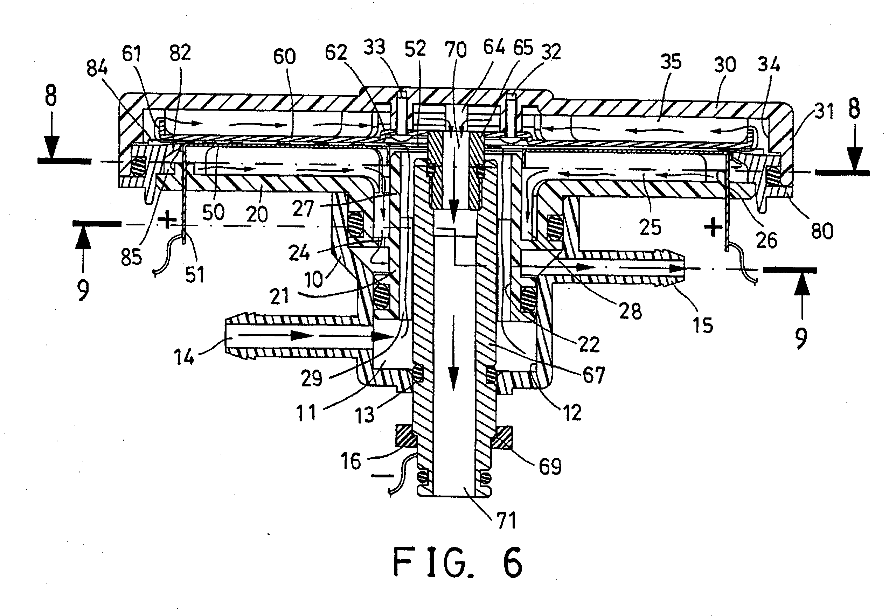

As shown in FIG. 6, the electrolytic solution or water may flow through the first or inlet port 14 and into the chamber 11 of the receptacle 1, and may then flow through the bore 22 of the cylindrical member 21, and may then be guided to flow through the gap 90 that is formed between the anode plate 50 and the cathode plate 60 (FIG. 7) and to flow radially from the center portions the anode plate 50 and the cathode plate 60 toward the outer peripheral portion of the anode plate 50 and the cathode plate 60, such that the flowing speed of the electrolytic solution may be gradually decreased or slowed down from the center portions toward the outer peripheral portion of the anode plate 50 and the cathode plate 60 for preventing an eddy current from being generated between the anode plate 50 and the cathode plate 60.

It is preferable, but not necessarily that the outer peripheral portion of the anode plate 50 may be slightly bent or tilted downwardly or further spaced away from the cathode plate 60, and/or the outer peripheral portion of the cathode plate 60 may be slightly bent or tilted upwardly or further spaced away from the anode plate 50 for further increasing the volume between the outer peripheral portion of the anode plate 50 and the cathode plate 60 and for further decreasing the flowing speed of the electrolytic solution and thus for further preventing the eddy current from being generated between the anode plate 50 and the cathode plate 60, and thus for allowing the electrolytic solution to smoothly flow through the gap 90 that is formed between the anode plate 50 and the cathode plate 60.

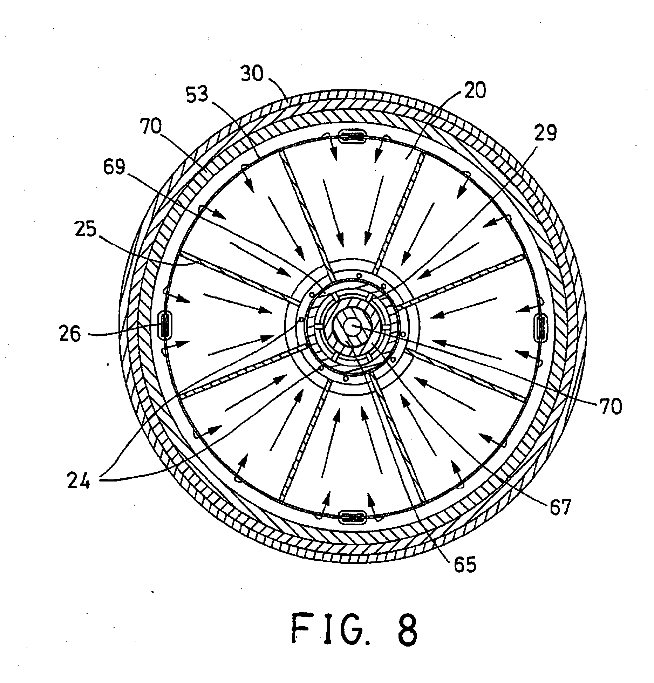

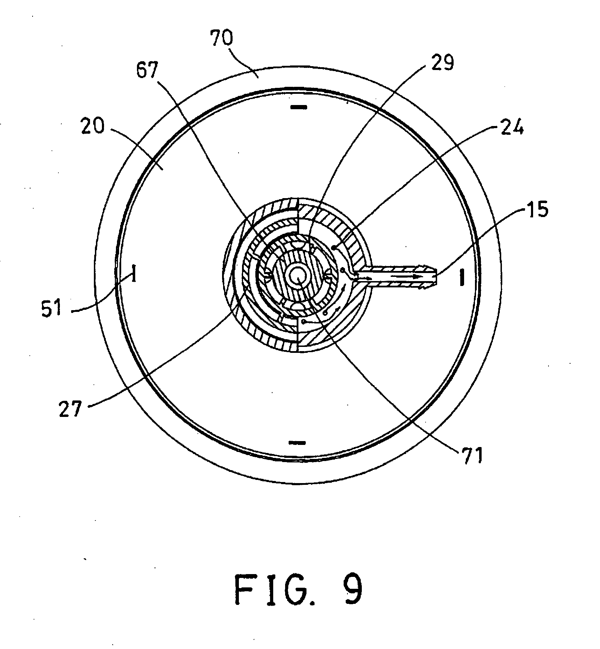

In operation, as also shown in FIGS. 6-9, the electrolytic solution may be supplied and flown into the receptacle 10 via the inlet port 14 of the receptacle 10, and then flowing through the bore 22 of the cylindrical member 21 and the center hole 52 of the anode plate 50 and then guided to flow through the gap 90 that is formed between the anode plate 50 and the cathode plate 60. When the cathode plate 60 and the anode plate 50 are energized or actuated or operated, the anolyte 99 may be generated and attracted toward the cathode plate 60 and may thus be forced or attracted to flow closer to the cathode plate 60, and the catholyte 88 may be generated and attracted toward the anode plate 50 and may thus be forced or attracted to flow closer to the anode plate 50.

The annular separator 80 is disposed or secured between the cover 30 and the housing 20 and disposed around the anode plate 50 and the cathode plate 60, and includes a tip 82, such as an inner peripheral tip 82 extended into the space 23 of the housing 20 or extended into the compartment 34 of the cover 30 and extended toward the gap 90, such as toward the middle or intermediate portion of the gap 90 that is formed between the anode plate 50 and the cathode plate 60, best shown in FIG. 7, for suitably separating the anolyte 99 and the catholyte 88 from each other and for preventing the anolyte 99 and the catholyte 88 from being mixed or blended with each other. The separator 80 includes one or more projections 84 and studs 85 extended upwardly and downwardly therefrom for engaging with the anode plate 50 and the cathode plate 60 and for suitably anchoring and separating the anode plate 50 and the cathode plate 60 from each other.

The anolyte 99 may be generated and attracted toward the cathode plate 60 and may thus be forced or caused or attracted to flow closer to the cathode plate 60, and may then be guided to flow into the compartment 34 of the cover 30 by the cathode plate 60 itself and/or by the separator 80 and then to flow through the space between the cover 30 and the cathode plate 60 or to flow through the compartment 34 of the cover 30, and may then be guided to flow out through the conductor tube 65 and the conductor pipe 67, and then for allowing the anolyte 99 to be collected for further use. Simultaneously, the catholyte 88 may be generated and attracted toward the anode plate 50 and may thus be forced or caused to flow closer to the anode plate 50, and may then be guided to flow into the peripheral channel 28 of the housing 20 by the anode plate 50 itself and/or by the separator 80 and may then be guided to flow through the openings 24 of the cylindrical member 21 of the housing 20, and then to flow out of the receptacle 10 via the second or outlet port 15 of the receptacle 10, for allowing the catholyte 88 to be collected for further use.

The cathode plate 60 and the anode plate 50 may thus be used for generating the anolyte 99 and the catholyte 88 respectively, and for guiding the catholyte 88 to flow into the peripheral channel 28 and the openings 24 of the cylindrical member 21 of the housing 20 and then to flow out through the second or outlet port 15 of the receptacle 10, and for guiding the anolyte 99 to flow into the compartment 34 of the cover 30 and then to flow out through the conductor tube 65 and the conductor pipe 67. The tip 82 or the separator 80 may thus be acted as a separating means or device for separating the anolyte 99 and the catholyte 88 away from each other, and for effectively guiding the catholyte 88 and the anolyte 99 to flow into the peripheral channel 28 of the housing 20 and the compartment 34 of the cover 30 respectively.

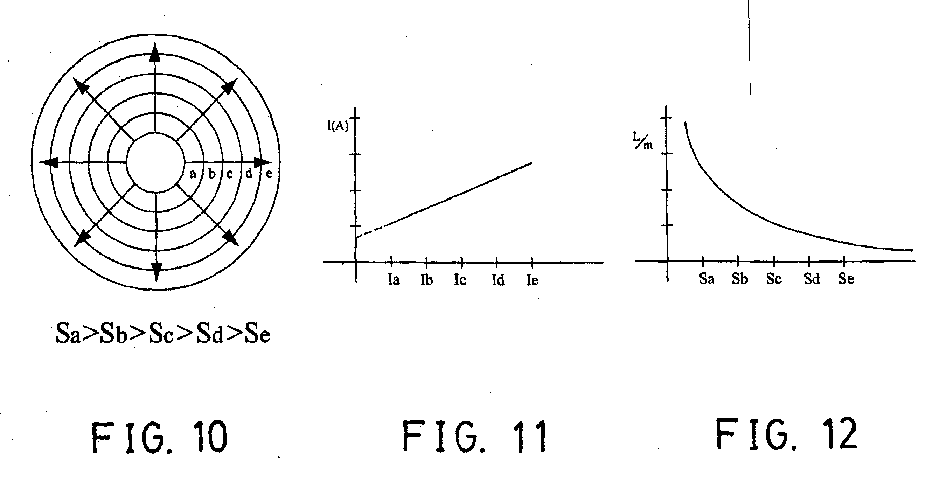

As shown in FIGS. 10-12, the anolyte 99 and the catholyte 88 or the electrolytic solution may be forced to flow radially from the center portion the anode plate 50 and the cathode plate 60 toward the outer peripheral portion of the anode plate 50 and the cathode plate 60, such that the flowing speed of the electrolytic solution may be gradually slowed down or decreased from the center portion toward the outer peripheral portion of the anode plate 50 and the cathode plate 60, and the skin effect (L/M) Sa, Sb, Sc, Sd, Se ... may also be gradually decreased from the center portion toward the outer peripheral portion of the anode plate 50 and the cathode plate 60 (FIG. 12), and the electric current (I) Ia, Ib, Ic, Id, Ie ... may be gradually increased from the center portion toward the outer peripheral portion of the anode plate 50 and the cathode plate 60 (FIG.10).

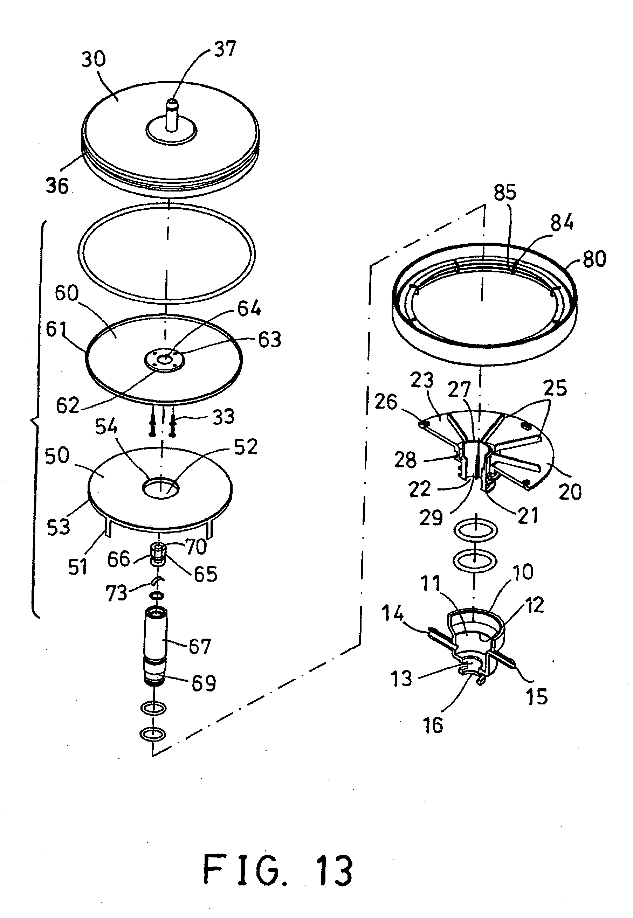

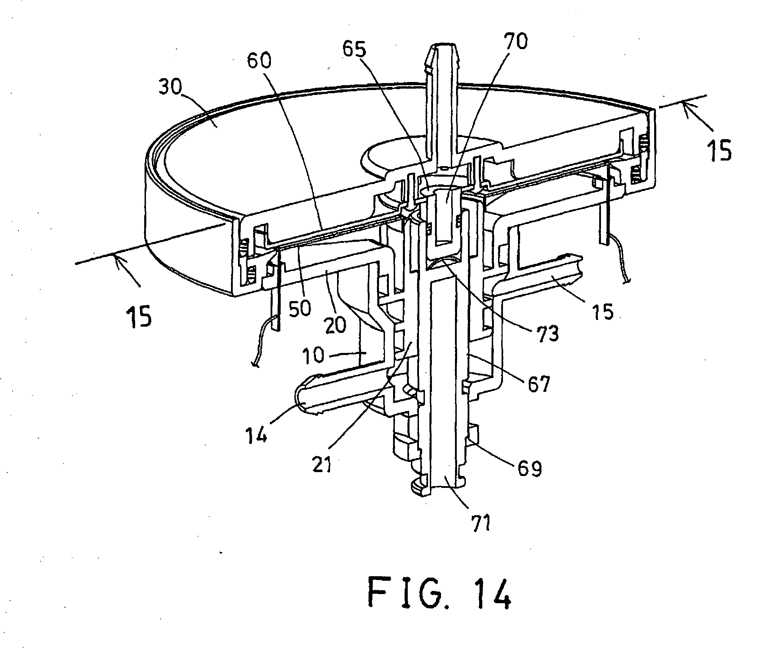

Alternatively, as shown in FIGS. 13-16, the housing 20 may also include a sleeve or cylindrical member 21 extended downwardly therefrom for engaging into the chamber 11 of the receptacle 10 and also includes a space 23 communicating with the bore 22 of the cylindrical member 21 and defined by a peripheral wall 24, and includes a number of radially extended ribs 25 extended into the space 23 of the housing 20 for guiding the electrolytic solution or water to flow from the space 23 into the bore 22 of the cylindrical member 21 of the housing 20. A cover 30 may also be secured onto the housing 20 with such as a threaded engagement 36, and also includes a compartment 34 formed therein.

The anode plate 50 is also disposed or engaged into the compartment 34 of the cover 30 and disposed or engaged onto or seated on the bottom portion of the cover 30 and includes one or more electrodes 51, such as positive electrodes 51, extended therefrom for coupling to such as the electric power source, and includes a center hole 52 formed therein. The cathode plate 60 is disposed or engaged onto or seated on the ribs 35 of the cover 30 and includes bore 64 formed therein for receiving or engaging with a conductor tube 65 which may be solidly secured to the cathode plate 60 with such as force-fitted engagements, adhesive materials, or by welding processes. The conductor tube 65 includes an outer thread 66 for threading with an inner thread 68 of a conductor pipe 67 which is engaged through the bore 22 of the cylindrical member 21 and extended out of the conduit 13 of the receptacle 10.

The cathode plate 60 includes a recess 62 formed therein and defined by a curved barrier 63 and facing upwardly toward and aligned with the center hole 52 of the anode plate 50 for allowing the electrolytic solution or water from the inlet mouth 33 of the cover 30 and through the center hole 52 of the anode plate 50 to be guided to flow through a gap 64 that is formed between the anode plate 50 and the cathode plate 60. The electrolytic solution or water flowing through the center hole 52 of the anode plate 50 may also be buffered by the recess 62 of the cathode plate 60 and may then be guided to flow through the gap 64 that is formed between the anode plate 50 and the cathode plate 60 and to flow radially from the center portions the anode plate 50 and the cathode plate 60 toward the outer peripheral portion of the anode plate 50 and the cathode plate 60, such that the flowing speed of the electrolytic solution may also be gradually decreased or slowed down from the center portions toward the outer peripheral portion of the anode plate 50.

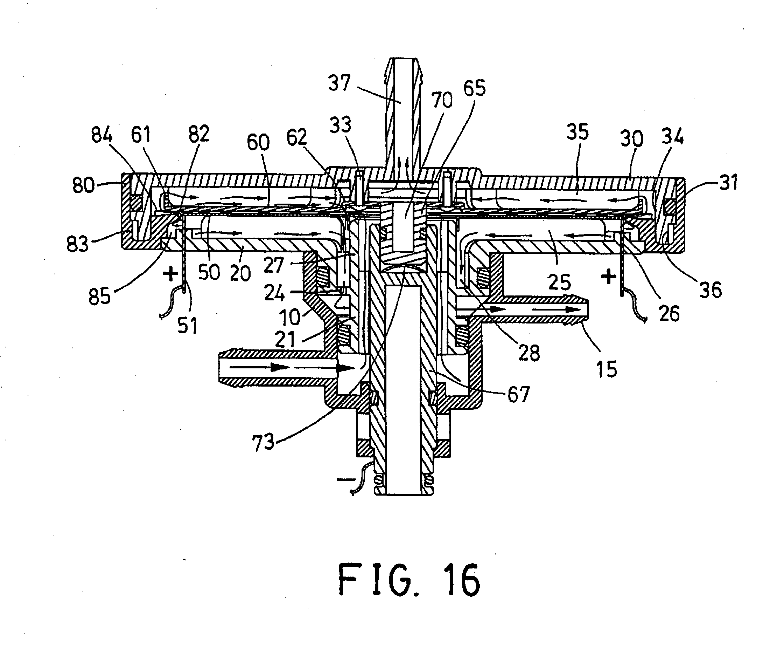

In operation, as shown in FIG. 16, the electrolytic solution may be supplied and flown into the inlet mouth 33 of the cover 30 and through the center hole 52 of the anode plate 50 and then buffered and guided to flow through the gap 64 that is formed between the anode plate 50 and the cathode plate 60 by such as the recess 62 of the cathode plate 60. When the cathode plate 60 and the anode plate 50 are energized or actuated or operated, the anolyte 66 may be generated and attracted toward the cathode plate 60 and may thus be forced or attracted to flow closer to the cathode plate 60, and the catholyte 55 may be generated and attracted toward the anode plate 50 and may thus be forced or attracted to flow closer to the anode plate 50.

The annular separator 80 is disposed or secured between the cover 30 and the housing 20 and disposed around the anode plate 50 and the cathode plate 60, and includes a tip 82, such as an inner peripheral tip 82 extended into the space 23 of the housing 20 or extended into the compartment 34 of the cover 30 and extended toward the gap 90, such as toward the middle or intermediate portion of the gap 90 that is formed between the anode plate 50 and the cathode plate 60 for suitably separating the anolyte 99 and the catholyte 88 from each other and for preventing the anolyte 99 and the catholyte 88 from being mixed or blended with each other. The separator 80 includes one or more projections 84 and studs 85 extended upwardly and downwardly therefrom for engaging with the anode plate 50 and the cathode plate 60 and for suitably anchoring and separating the anode plate 50 and the cathode plate 60 from each other.

The anolyte 99 may be generated and attracted toward the cathode plate 60 and may thus be forced or caused or attracted to flow closer to the cathode plate 60, and may then be guided to flow into the compartment 34 of the cover 30 by the cathode plate 60 itself and/or by the separator 80 and then to flow through the space between the cover 30 and the cathode plate 60 or to flow through the compartment 34 of the cover 30. Simultaneously, the catholyte 88 may be generated and attracted toward the anode plate 50 and may thus be forced or caused to flow closer to the anode plate 50, and may then be guided to flow into the peripheral channel 28 of the housing 20 by the anode plate 50 itself and/or by the separator 80 and may then be guided to flow through the openings 24 of the cylindrical member 21 of the housing 20, and then to flow out of the receptacle 10 via the second or outlet port 15 of the receptacle 10, for allowing the catholyte 88 to be collected for further use.

The cathode plate 60 and the anode plate 50 may thus be used for generating the anolyte 99 and the catholyte 88 respectively, and for guiding the catholyte 88 to flow into the peripheral channel 28 and the openings 24 of the cylindrical member 21 of the housing 20 and then to flow out through the second or outlet port 15 of the receptacle 10, and for guiding the anolyte 99 to flow into the compartment 34 of the cover 30. The tip 82 or the separator 80 may thus be acted as a separating means or device for separating the anolyte 99 and the catholyte 88 away from each other, and for effectively guiding the catholyte 88 and the anolyte 99 to flow into the peripheral channel 28 of the housing 20 and the compartment 34 of the cover 30 respectively.

As also shown in FIGS. 10-12, the anolyte 99 and the catholyte 88 or the electrolytic solution may also be forced to flow radially from the center portion the anode plate 50 and the cathode plate 60 toward the outer peripheral portion of the anode plate 50 and the cathode plate 60, such that the flowing speed of the electrolytic solution may be gradually slowed down or decreased from the center portion toward the outer peripheral portion of the anode plate 50 and the cathode plate 60, and the skin effect (L/M) Sa, Sb, Sc, Sd, Se ... may also be gradually decreased from the center portion toward the outer peripheral portion of the anode plate 50 and the cathode plate 60 (FIG. 12), and the electric current (I) Ia, Ib, Ic, Id, Ie ... may be gradually increased from the center portion toward the outer peripheral portion of the anode plate 50 and the cathode plate 60 (FIG. 10).

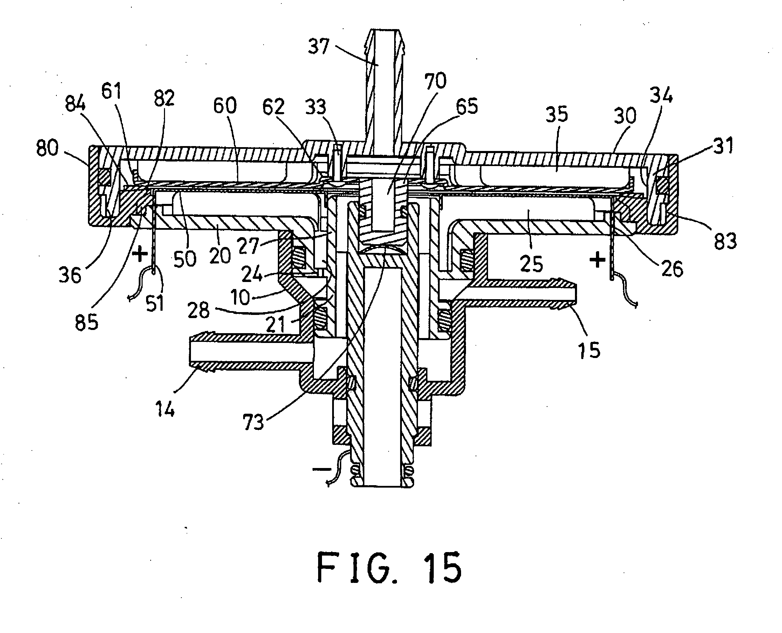

The bore 70 of the conductor tube 65 may be a blind bore 70, and the cover 30 may include an outer thread 36 for threading with an inner thread 83 of the separator 80 (FIGS. 15, 16), and may include a mouth 37, such as an outlet mouth 37 formed therein for receiving the anolyte 99 and for guiding the anolyte 99 to flow out through the outlet mouth 37 of the cover 30 directly without through the conductor pipe 67. A spring member 73 may be provided and engaged between the conductor tube 65 and the conductor pipe 67 for positioning the conductor tube 65 and the conductor pipe 67 relative to each other. The electrolytic solution or water flowing through the center hole 52 of the anode plate 50 may thus be guided to flow through the gap 90 that is formed between the anode plate 50 and the cathode plate 60 and to flow radially from the center portions the anode plate 50 and the cathode plate 60 toward the outer peripheral portion of the anode plate 50 and the cathode plate 60, such that the flowing speed of the electrolytic solution may also be gradually decreased or slowed down from the center portions toward the outer peripheral portion of the anode plate 50.

It is to be noted that the typical electrolytic cells or electrolyzer failed to provide a cathode plate 60 and an anode plate 50 horizontally or one above the other, for allowing the electrolytic solution to be guided to flow radially through a gap that is formed between the anode plate 50 and the cathode plate 60, and for allowing the flowing speed of the electrolytic solution to be gradually decreased or slowed down from the center portions toward the outer peripheral portion of the anode plate 50 and the cathode plate 60 for preventing an eddy current from being generated between the anode plate 50 and the cathode plate 60.

Accordingly, the electrolyzer in accordance with the invention may be provided for suitably separating and collecting the anolyte and the catholyte from the flowing electrolyte and for preventing the anolyte and the catholyte from being mixed or blended with each other.

Although this invention has been described with a certain degree of particularity, it is to be understood that the present disclosure has been made by way of example only and that numerous changes in the detailed construction and the combination and arrangement of parts may be resorted to without departing from the spirit and scope of the invention as hereinafter claimed.

## Claims

1. An electrolyzer comprising:
a housing (20) including a space (23) formed therein for receiving an electrolytic solution to be electrolyzed, and including a plurality of ribs (25) radially extended into the space of the housing, and including at least one orifice (26) formed therein,
a cover (30) attached onto the housing for enclosing the space of the housing, and including a compartment (34) formed therein and including a plurality of ribs (35) radially extended into the compartment of the cover,
an anode plate (50) disposed in the space of the housing and including a center hole (52) formed therein for receiving the electrolytic solution, the anode plate being coupled with a positive electric power source,
a cathode plate (60) disposed in the cover (30) and including a bore (64) formed therein, and spaced from the anode plate for forming a gap between the anode plate and the cathode plate, and for guiding the electrolytic solution to flow radially through the gap formed between the anode plate and the cathode plate, the cathode plate being coupled with a negative electric power source,
a conductor pipe (67) coupled to the cathode plate (60),
a separator (80) disposed in the housing and disposed around the anode plate and the cathode plate, and having a tip (82) extended toward the gap that is formed between the anode plate and the cathode plate for separating the anolyte and the catholyte from each other, and
a receptacle (10) includes a chamber (11) formed therein, and includes a first port (14) and a second port (15) formed therein and communicating with the chamber of the receptacle for allowing the electrolytic solution to flow into and out of the chamber of the receptacle,
the cathode plate being provided for attracting anolyte ot tne electrolytic solution toward the cathode plate, and the anode plate being provided for attracting catholyte of the electrolytic solution toward the anode plate, and for allowing the anolyte and the catholyte to be separated from each other.

2. The electrolyzer as claimed in claim 1, wherein the separator includes at least one projection extended therefrom and at least one stud extended therefrom for separating the anode plate and the cathode plate from each other.

3. The electrolyzer as claimed in claim 1, wherein the anolyte flows into the compartment (34) of the cover (30) and then flows out through the conductor tube (65) and the conductor pipe (67).

4. The electrolyzer as claimed in claim 1, wherein the housing and the cover are threaded together with inner and outer threads.

## Patentansprüche

1. Ein Elektrolyseur aufweisend:
ein Gehäuse(20) umfassend einen Raum (23), der für die Aufnahme einer elektrolytischen Lösung, die elektrolysiert werden soll, darin gebildet wird, und umfassend eine Vielzahl von Rippen (25), die sich radial in den Raum des Gehäuses erstrecken, und umfassend wenigstens eine Öffnung (26) die darin gebildet wird,
eine Abdeckung (30), die an dem Gehäuse für das Einschließen des Raumes des Gehäuses angebracht ist, und umfassend eine Kammer (34), die darin gebildet wird und eine Vielzahl von Rippen (35) umfasst, die sich radial in die Kammer der Abdeckung erstrecken,
eine Anoden-Platte (50) die in dem Raum des Gehäuses angeordnet ist und eine zentrale Öffnung (52) umfasst, die für das Aufnehmen der elektrolytischen Lösung darin gebildet wird, wobei die Anoden-Platte mit einer positiven elektrischen Spannungsquelle gekoppelt ist,
eine Kathoden-Platte (60), die in der Abdeckung angeordnet ist und eine Bohrung (64) umfasst, die darin gebildet wird, und die von der Anoden-Platte für die Bildung einer Lücke zwischen der Anoden-Platte und der Kathoden-Platte beabstandet ist, und für das Führen von elektrolytischer Lösung zum radialen Fließen durch die Lücke, die zwischen der Anoden-Platte und der Kathoden-Platte gebildet wird, wobei die Kathoden-Platte mit einer negativen elektrischen Spannungsquelle gekoppelt ist,
ein Leiterrohr (67), das mit der Katoden-Platte (60) gekoppelt ist,
eine Trenneinrichtung (80), die in dem Gehäuse angeordnet ist und um die Anoden-Platte und die Kathoden-Platte angeordnet ist, und eine Spitze (82) hat, die sich in Richtung der Lücke erstreckt, die zwischen der Anoden-Platte und der Kathoden-Platte gebildet wird, für das Trennen des Anolyten und des Katholyten voneinander, und
eine Anschlusseinrichtung (10) umfasst eine Kammer (11), die darin gebildet wird, und umfasst einen ersten Anschluss (14) und einen zweiten Anschluss (15), der darin gebildet wird und für das Ermöglichen, dass die elektrolytische Lösung in und aus der Kammer der Anschlusseinrichtung strömt, mit der Kammer der Anschlusseinrichtung kommuniziert,
wobei die Kathoden-Platte für das Anziehen eines Anolyten der elektrolytischen Lösung zur Kathoden-Platte vorgesehen ist, und wobei die Anoden-Platte für das Anziehen eines Katholyten der elektrolytischen Lösung zur Anoden-Platte vorgesehen ist, und zum Ermöglichen, dass der Anolyt und der Katholyt voneinander getrennt werden.

2. Der Elektrolyseur gemäß Anspruch 1, wobei die Trenneinrichtung zumindest einen Vorsprung aufweist, der sich davon erstreckt, sowie wenigstens eine Nase, die sich davon erstreckt, und zwar zum Trennen der Anoden-Platte und der Kathoden-Platte voneinander.

3. Der Elektrolyseur gemäß Anspruch 1, wobei der Anolyt in die Kammer (34) der Abdeckung (30) fließt und dann durch das Leiterrohr (65) und das Leiterrohr (67) nach außen fließt.

4. Der Elektrolyseur gemäß Anspruch 1, wobei das Gehäuse und die Abdeckung mit einem Innengewinde und einem Außengewinde zusammengeschraubt sind.

## Revendications

1. Électrolyseur comprenant :
un boîtier (20) comprenant un espace (23) formé à l'intérieur pour recevoir une solution électrolytique devant être électrolysée, et comprenant une pluralité de nervures (25) s'étendant radialement dans l'espace du boîtier, et comprenant au moins un orifice (26) formé à l'intérieur,
un couvercle (30) attaché sur le boîtier pour fermer l'espace du boîtier, et comprenant un compartiment (34) formé à l'intérieur et comprenant une pluralité de nervures (35) s'étendant radialement dans le compartiment du couvercle,
une plaque d'anode (50) disposée dans l'espace du boîtier et comprenant un trou central (52) formé à l'intérieur pour recevoir la solution électrolytique, la plaque d'anode étant couplée avec une source d'alimentation électrique positive,
une plaque de cathode (60) disposée dans le couvercle (30) et comprenant un alésage (64) formé à l'intérieur, et espacée de la plaque d'anode pour former un espace entre la plaque d'anode et la plaque de cathode, et pour guider la solution électrolytique pour s'écouler de manière radiale à travers l'espace formé entre la plaque d'anode et la plaque de cathode, la plaque de cathode étant couplée avec une source d'alimentation électrique négative,
un tube conducteur (67) couplé à la plaque de cathode (60),
un séparateur (80) disposé dans le boîtier et disposé autour de la plaque d'anode et de la plaque de cathode, et ayant un embout (82) s'étendant vers l'espace qui est formé entre la plaque d'anode et la plaque de cathode pour séparer l'anolyte et le catholyte l'un de l'autre, et
un réceptacle (10) comprenant une chambre (11) formée à l'intérieur, et comprenant un premier orifice (14) et un deuxième orifice (15) formés à l'intérieur et communiquant avec la chambre du réceptacle pour permettre à la solution électrolytique de s'écouler à l'intérieur et hors de la chambre du réceptacle,
la plaque de cathode étant prévue pour attirer l'anolyte et de la solution électrolytique vers la plaque de cathode et la plaque d'anode étant prévue pour attirer le catholyte de la solution électrolytique vers la plaque d'anode, et pour permettre à l'anolyte et au catholyte d'être séparé l'un de l'autre.

2. Électrolyseur selon la revendication 1, dans lequel le séparateur comprend au moins une saillie s'étendant à partir de celui-ci et au moins une tige s'étendant à partir de celui-ci pour séparer la plaque d'anode et la plaque de cathode l'une de l'autre.

3. Électrolyseur selon la revendication 1, dans lequel l'anolyte s'écoule dans le compartiment (34) du couvercle (30) et s'écoule ensuite en dehors à travers le tube conducteur (65) et le tube conducteur (67).

4. Électrolyseur selon la revendication 1, dans lequel le boîtier et le couvercle sont filetés conjointement avec des filetages intérieur et extérieur.
